# EUROPEAN PATENT APPLICATION

(11) **EP 4 668 839 A1**
(43) Date of publication of application: **24.12.2025**
(21) Application number: 24777771.7
(22) Date of filing: 18.03.2024
(51) Int. Cl.: H04W 24/10

(54) **METHOD FOR SENDING INFORMATION AND COMMUNICATION APPARATUS**

(30) Priority: 31.03.2023 CN 202310387459
(71) Applicant: Huawei Technologies Co., Ltd., Shenzhen, Guangdong 518129 (CN)
(72) Inventor: TIAN, Yang, Shenzhen, Guangdong 518129 (CN); CHAI, Xiaomeng, Shenzhen, Guangdong 518129 (CN); SUN, Yan, Shenzhen, Guangdong 518129 (CN); JIN, Huangping, Shenzhen, Guangdong 518129 (CN); PANG, Jiyong, Shenzhen, Guangdong 518129 (CN)
(74) Representative: MERH-IP Matias Erny Reichl Hoffmann Patentanwälte PartG mbB
(86) International application number: PCT/CN2024/082141
(87) International publication number: WO 2024/198982

(57) **Abstract**

This application provides a method for sending information. The method may be applied to an AI positioning scenario. In the method, an AI positioning model deployed on a location management function network element uses a channel measurement result (or a channel feature extracted from a channel measurement result) reported by a channel measurement network element as an input. The location management function network element determines, based on different positioning accuracy requirements, information related to a payload size of a channel measurement report, and indicates, to the channel measurement network element, the information related to the payload size; or the channel measurement network element obtains information about a positioning accuracy requirement from the location management function network element, and determines, based on the positioning accuracy requirement and a feature of the channel measurement result, information related to a payload size of a channel measurement report. Therefore, under different channel conditions and/or positioning accuracy requirements, the channel measurement network element can be supported in reporting channel measurement reports that carry information related to different payload sizes, to support requirements for relatively low reporting overheads of channel measurement reports.

## Description

This application claims priority to Chinese Patent Application No. 202310387459.0, filed with the China National Intellectual Property Administration on March 31, 2023, and entitled "METHOD FOR SENDING INFORMATION AND COMMUNICATION APPARATUS", which is incorporated herein by reference in its entirety.

### TECHNICAL FIELD

Embodiments of this application relate to the field of artificial intelligence (artificial intelligence, Al), and more specifically, to a method for sending information and a communication apparatus.

### BACKGROUND

In an Al-based positioning technology, an AI positioning model is usually deployed on a location management function (location management function, LMF) network element. The AI positioning model uses a channel measurement result reported by a channel measurement network element as an input and uses a location of a terminal device as an output. Therefore, the channel measurement network element usually needs to report a channel measurement report to the location management function network element.

However, in a known solution, the channel measurement network element reports all channel measurement results by using a channel measurement report after completing channel measurements and obtaining the channel measurement results, leading to high reporting overheads of the channel measurement report. Therefore, a solution is urgently needed to support a requirement for relatively low reporting overheads.

### SUMMARY

This application provides a method for sending information and a communication apparatus. The method and apparatus may be applied to an AI positioning scenario, to support a flexible payload format of a channel measurement report and support a requirement for relatively low reporting overheads.

According to a first aspect, a method for sending information is provided. The method may be performed by a network element, a chip, a chip system, a hardware circuit (for example, a logic circuit or an integrated circuit), a software module, or an apparatus combining a hardware circuit and a software module. The following uses a first network element as an example for description. The method includes:
sending first indication information to a location management function network element, where the first indication information indicates information related to a payload size of a channel measurement report, where
the information related to the payload size includes one or more of the following:
   a path quantity corresponding to one or more paths; and
   a bit quantity corresponding to information about each of the one or more paths.

In a research process of this application, it is found that, in an existing positioning scenario, exchange of multipath information between a location management function network element on which an AI positioning model is deployed and a channel measurement network element that reports a channel measurement report does not consider that features of different channel measurement results have different degrees of impact on positioning performance (for example, positioning inference accuracy) of the AI positioning model under different channel conditions. Consequently, there are redundant reporting overheads in reporting of the channel measurement report. However, a research result of this application indicates that information related to a payload size of a channel measurement report reported by the channel measurement network element under different channel conditions varies, leading to different degrees of impact on positioning inference accuracy of the AI positioning model. For example, for the same AI positioning model, under one channel condition, submeter-level positioning accuracy can be achieved if a payload of a channel measurement report reported by the channel measurement network element includes information about 256 paths; and under another channel condition, submeter-level positioning accuracy can be achieved if a payload of a channel measurement report reported by the channel measurement network element includes information about 32 paths. Because the channel condition may be learned of through analysis based on a feature of a channel measurement result, this application proposes that a flexible payload format should be used for the channel measurement report to support a requirement for relatively low reporting overheads under different channel conditions, provided that a positioning accuracy requirement is met.

In this technical solution, the first network element (that is, the channel measurement network element) sends the first indication information to the location management function network element, where the first indication information indicates the information related to the payload size of the channel measurement report, for example, a path quantity corresponding to multipath information and/or a bit quantity corresponding to information about each path that are/is carried in the channel measurement report. In this application, the first network element may send information related to different payload sizes to the location management function network element under different channel conditions. Therefore, the first network element indicates, by using the first indication information, the information related to the payload size (which may also be understood as a payload format) of the channel measurement report, so that the location management function decodes the channel measurement report based on the first indication information, to obtain the multipath information. It can be learned that, in the technical solution of this application, a flexible payload format may be indicated, that is, the information related to the payload size is adaptively adjusted under different channel conditions, to support a requirement for relatively low reporting overheads as a whole.

In embodiments of this application, reducing reporting overheads of the channel measurement report may alternatively be represented as reducing the payload size (or referred to as the payload size) of the channel measurement report.

With reference to the first aspect, in some implementations of the first aspect, the method further includes:
determining, based on the positioning accuracy requirement and the feature of the channel measurement result, the information related to the payload size.

In this implementation, the first network element determines, based on the positioning accuracy requirement and the feature of the channel measurement result obtained by analyzing the channel measurement result, the information related to the payload size of the channel measurement report, so that a requirement for relatively low reporting overheads can be supported while the positioning accuracy requirement is met.

With reference to the first aspect, in some implementations of the first aspect, determining, based on the positioning accuracy requirement and the feature of the channel measurement result, the information related to the payload size includes:
determining, based on any one of the following mapping relationships, the information related to the payload size:
a mapping relationship between a positioning accuracy level and the information related to the payload size;
a mapping relationship between a channel condition and the information related to the payload size; and
a mapping relationship between a positioning accuracy level, a channel condition, and the information related to the payload size, where
the positioning accuracy level is determined based on the positioning accuracy requirement, and the channel condition is determined based on the feature of the channel measurement result.

In this implementation, when determining the information related to the payload size of the channel measurement report, the first network element may specifically determine, based on the mapping relationship between the positioning accuracy level and/or the channel condition and the information related to the payload size, the information related to the payload size of the channel measurement report corresponding to the current positioning accuracy level and the current channel condition.

With reference to the first aspect, in some implementations of the first aspect, the first network element is the channel measurement network element, and the method further includes:
receiving information about the positioning accuracy requirement from the location management function network element.

For example, the information about the positioning accuracy requirement may be carried in a measurement request, or may be carried in a message different from a measurement request.

In this implementation, the location management function network element sends corresponding positioning accuracy requirements to the first network element under different positioning accuracy requirements. The first network element correspondingly reports, based on different positioning accuracy requirements, channel measurement reports that carry information related to different payload sizes, thereby helping reduce redundancy of reporting overheads of the channel measurement reports.

According to a second aspect, a method for receiving information is provided. The method may be performed by a network element, a chip, a chip system, a hardware circuit (for example, a logic circuit or an integrated circuit), a software module, or an apparatus combining a hardware circuit and a software module. The following uses a location management function network element as an example for description. The method includes:
receiving first indication information from a first network element, where the first indication information indicates information related to a payload size of a channel measurement report, where
the information related to the payload size includes one or more of the following:
   a path quantity corresponding to one or more paths; and
   a bit quantity corresponding to information about each of the one or more paths.

With reference to the second aspect, in some implementations of the second aspect, the information related to the payload size is based on a positioning accuracy requirement and a feature of a channel measurement result.

With reference to the second aspect, in some implementations of the second aspect, the information related to the payload size is determined based on any one of the following mapping relationships:
a mapping relationship between a positioning accuracy level and the information related to the payload size;
a mapping relationship between a channel condition and the information related to the payload size; and
a mapping relationship between a positioning accuracy level, a channel condition, and the information related to the payload size, where
the positioning accuracy level is determined based on the positioning accuracy requirement, and the channel condition is determined based on the feature of the channel measurement result.

With reference to the second aspect, in some implementations of the second aspect, the method further includes:
sending information about the positioning accuracy requirement to the first network element.

According to a third aspect, a method for sending information is provided. The method may be performed by a network element, a chip, a chip system, a hardware circuit (for example, a logic circuit or an integrated circuit), a software module, or an apparatus combining a hardware circuit and a software module. The following uses a location management function network element as an example for description. The method includes:
determining, based on a positioning-related requirement, information related to a payload size of a channel measurement report, where the positioning-related requirement includes at least a positioning accuracy requirement, and the information related to the payload size includes one or more of the following: a path quantity corresponding to one or more paths, or a bit quantity corresponding to information about each of the one or more paths;
sending third indication information, where the third indication information indicates the information related to the payload size; and
receiving the channel measurement report.

For the same reason as described in the first aspect, in the method of the second aspect, the location management function network element may determine, based on the positioning-related requirement, the information related to the payload size of the channel measurement report, and indicate, to a first network element, the information related to the payload size. The information related to the payload size determined by the location management function network element varies under different positioning-related requirements. The first network element reports, based on the indication of the location management function network element, the channel measurement report that carries the indicated information related to the payload size, so that a flexible payload format can be supported, thereby supporting a requirement for relatively low reporting overheads.

With reference to the third aspect, in some implementations of the third aspect, determining, based on the positioning-related requirement, the information related to the payload size of the channel measurement report includes:
determining, based on a mapping relationship between the positioning-related requirement and the information related to the payload size, the information related to the payload size.

According to a fourth aspect, a method for sending information is provided. The method may be performed by a network element, a chip, a chip system, a hardware circuit (for example, a logic circuit or an integrated circuit), a software module, or an apparatus combining a hardware circuit and a software module. The following uses a first network element as an example for description. The method includes:
receiving third indication information from a location management function network element, where the third indication information indicates information related to a payload size of a channel measurement report, and the information related to the payload size includes one or more of the following: a path quantity corresponding to one or more paths, or a bit quantity corresponding to information about each of the one or more paths; and
sending the channel measurement report to the location management function network element based on the third indication information.

With reference to the fourth aspect, in some implementations of the fourth aspect, the information related to the payload size is determined based on a positioning-related requirement, and the positioning-related requirement includes at least a positioning accuracy requirement.

According to a fifth aspect, this application provides a method for sending information. The method includes the following steps:
A first network element sends first indication information to a location management function network element, where the first indication information indicates information related to a payload size of a channel measurement report, and the information related to the payload size includes one or more of the following: a path quantity corresponding to one or more paths, or a bit quantity corresponding to information about each of the one or more paths; and
the location management function network element receives the first indication information from the first network element.

With reference to the fifth aspect, in some implementations of the fifth aspect, the method further includes:
the location management function network element decodes the channel measurement report based on the first indication information, to obtain the information related to the payload size.

According to a sixth aspect, this application provides a method for sending information. The method includes the following steps:
A location management function network element determines, based on a positioning-related requirement, information related to a payload size of a channel measurement report, where the positioning-related requirement includes at least a positioning accuracy requirement, and the information related to the payload size includes one or more of the following: a path quantity corresponding to one or more paths, or a bit quantity corresponding to information about each of the one or more paths;
the location management function network element sends third indication information to a first network element, where the third indication information indicates the information related to the payload size;
the first network element receives the third indication information;
the first network element sends the channel measurement report to the location management function network element based on the third indication information; and
the location management function network element receives the channel measurement report from the first network element.

In the method of any one of the first aspect to the sixth aspect or some implementations of any one of the foregoing aspects, the channel measurement result includes information about the one or more paths, information about a first path of the one or more paths includes one or more of the following information about the first path: amplitude and phase information, amplitude information, phase information, or angle information, and the first path is any one of the one or more paths.

In this implementation, the feature of the channel measurement result may be obtained by obtaining the channel measurement result, that is, one or more pieces of the foregoing information about the one or more paths, and then the current channel condition is learned of through analysis, so that the information related to the payload size under the current channel condition is determined while the positioning accuracy requirement is met.

In the method of any one of the first aspect to the sixth aspect or some implementations of any one of the foregoing aspects, the feature of the channel measurement result includes one or more of the following:
delay spread information, angle spread information, angle-delay-power information, a quantity of paths whose energy exceeds a preset energy proportion of energy of the first path in sampled paths, a Rician K-factor, a Doppler frequency measurement result, a line-of-sight LOS probability, an interference level of a sampled full band or subband, or reference signal received power RSRP of a full band or subband.

This implementation provides a plurality of features of the channel measurement result that can reflect the channel condition. The current channel condition may be learned of by analyzing the features of the channel measurement result. Under different channel conditions, provided that the positioning accuracy is ensured, channel measurement reports that carry information related to different payload sizes are selected for reporting, so that redundancy of reporting overheads can be reduced, and that a requirement for relatively low reporting overheads can be supported.

According to a seventh aspect, this application provides a communication apparatus. The communication apparatus may include a one-to-one corresponding module configured to perform the method/operation/step/action in any one of the first aspect to the fourth aspect or the implementations of any one of the foregoing aspects. The module may be a hardware circuit, or may be software, or may be implemented by a hardware circuit in combination with software. The communication apparatus may be a first network element or a positioning function network element, or a chip or a circuit used for a first network element or a positioning function network element.

In an implementation, the communication apparatus is a communication device. For example, the communication device may include a communication unit and/or a processing unit. The communication unit may be a transceiver or an input/output interface; and the processing unit may be at least one processor. Optionally, the transceiver may be a transceiver circuit. Optionally, the input/output interface may be an input/output circuit. In an example, the communication apparatus is a communication device, for example, a terminal device, an access network device, or a location management function network element in this application.

In another implementation, the communication apparatus is a chip, a chip system, or a circuit used in a communication device. For example, the communication unit may be an input/output interface, an interface circuit, an input/output circuit, a pin, a related circuit, or the like on the chip, the chip system, or the circuit. The processing unit may be at least one processor, processing circuit, a logic circuit, or the like.

According to an eighth aspect, this application provides a communication apparatus. The communication apparatus includes a processor. The processor is configured to execute a computer program or instructions stored in a memory, to perform the method provided in any one of the first aspect to the fourth aspect or the implementations of any one of the foregoing aspects. Optionally, the communication apparatus further includes the memory. The communication apparatus may be a first network element or a location management function network element, or a chip or a circuit used for a first network element or a location management function network element.

According to a ninth aspect, this application provides a communication apparatus. The communication apparatus includes a processor and a communication interface, configured to perform the method provided in any one of the first aspect to the fourth aspect or the implementations of any one of the foregoing aspects. For example, the communication interface may be a transceiver, a hardware circuit, a bus, a module, a pin, or a communication interface of another type.

According to a tenth aspect, this application further provides a computer program. When the computer program is run on a computer, the computer is enabled to perform the method provided in any one of the first aspect, the second aspect, the third aspect, or the fourth aspect, or the implementations of the first aspect to the fourth aspect.

According to an eleventh aspect, this application further provides a computer program product including instructions. When the instructions are run on a computer, the computer is enabled to perform the method provided in any one of the first aspect to the fourth aspect or the implementations of the first aspect to the fourth aspect.

According to a twelfth aspect, this application further provides a computer-readable storage medium. The computer-readable storage medium stores a computer program or instructions. When the computer program or the instructions are run on a computer, the computer is enabled to perform the method provided in any one of the first aspect to the fourth aspect or the implementations of the first aspect to the fourth aspect.

According to a thirteenth aspect, this application further provides a chip. The chip is configured to read a computer program stored in a memory, to perform the method provided in any one of the first aspect to the fourth aspect or the implementations of the first aspect to the fourth aspect; or the chip includes a circuit configured to perform the method provided in any one of the first aspect to the fourth aspect or the implementations of the first aspect to the fourth aspect.

According to a fourteenth aspect, this application further provides a chip system. The chip system includes a processor, configured to support an apparatus in implementing the method provided in any one of the first aspect to the fourth aspect or the implementations of the first aspect to the fourth aspect. In a possible design, the chip system further includes a memory. The memory is configured to store a program and data that are necessary for the apparatus. The chip system may include a chip, or may include a chip and another discrete component.

According to a fifteenth aspect, this application provides a communication system, including the foregoing first network element and location management function network element.

For example, the first network element may include an access network device and/or a terminal device.

For technical effects of solutions provided in the fifth aspect to the fifteenth aspect, refer to descriptions of technical effects of corresponding solutions in the first aspect to the fourth aspect. Details are not described again.

### BRIEF DESCRIPTION OF DRAWINGS

FIG. 1 is an example of a wireless positioning system to which an embodiment of this application is applicable;
FIG. 2 is a diagram of network elements according to an embodiment of this application;
FIG. 3 is a diagram of an AI/ML network element or module;
FIG. 4 is a schematic flowchart of a method 300 for sending information according to this application;
FIG. 5 is a schematic flowchart of a method 400 for sending information according to this application;
FIG. 6 is an example of application of information sending to uplink positioning according to this application;
FIG. 7 is an example of application of information sending to downlink positioning according to this application;
FIG. 8 is an example of application of information sending to uplink positioning according to this application;
FIG. 9 is an example of application of information sending to downlink positioning according to this application;
FIG. 10 is a block diagram of a communication apparatus 1000 according to this application; and
FIG. 11 is a block diagram of another communication apparatus 1100 according to this application.

### DESCRIPTION OF EMBODIMENTS

The following describes technical solutions of this application with reference to accompanying drawings.

The technical solutions provided in this application may be applied to various communication systems. For example, the communication systems include but are not limited to a long term evolution (long term evolution, LTE) system, a 5th generation (5th generation, 5G) communication system, a wireless local area network (wireless local area network, WLAN) system, a satellite communication system, an open radio access network (open radio access network, O-RAN) system, a future communication system, for example, a 6G communication system, or a system converged from a plurality of systems. The 5G communication system may also be referred to as a new radio (new radio, NR) system.

A network element in the communication system may send a signal to another network element or receive a signal from another network element. The signal may include information, signaling, data, or the like. The network element may alternatively be replaced with an entity, a network entity, a device, a communication device, a communication module, a node, a communication node, or the like. In this application, the network element is used as an example for description.

The communication system to which this application is applicable may include a first network element and a location management function network element. Optionally, in different positioning scenarios, the first network element may be an access network device or a terminal device. Optionally, the location management function network element may also be referred to as a positioning function network element, and this is not limited. In addition, a quantity of network elements, for example, the first network element and the location management function network element, is not limited in embodiments in this application.

In embodiments of this application, the terminal device may be an entity, for example, a mobile phone, configured to receive or transmit a signal. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. The terminal device can be widely applied to various scenarios, for example, cellular communication, a wireless fidelity (wireless fidelity, Wi-Fi) system, device-to-device (device-to-device, D2D), vehicle-to-everything (vehicle-to-everything, V2X), peer-to-peer (peer-to-peer, P2P), machine-to-machine (machine-to-machine, M2M), machine type communication (machine type communication, MTC), an Internet of Things (Internet of Things, IoT), virtual reality (virtual reality, VR), augmented reality (augmented reality, AR), industrial control, self-driving, telemedicine, a smart grid, smart furniture, a smart office, smart wear, intelligent transportation, a smart city, an uncrewed aerial vehicle, robotics, remote sensing, passive sensing, positioning, navigation and tracking, and self-delivery and mobility. Some examples of the terminal device are as follows: user equipment (user equipment, UE) in a 3GPP standard, a station (station, STA) in a Wi-Fi system, a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, an aircraft, a ship, a remote control device, a smart household device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile Internet device (mobile Internet device, MID), a wearable device like a smartwatch, a virtual reality (virtual reality, VR) device, an augmented reality (augmented reality, AR) device, a wireless terminal in industrial control (industrial control), a terminal in an Internet of Vehicles system, a wireless terminal in self-driving (self driving), a wireless terminal in a smart grid (smart grid), a wireless terminal in transportation safety (transportation safety), a wireless terminal in a smart city (smart city) like a smart fuel dispenser, a terminal device on a high-speed railway, and wireless terminals in a smart home (smart home) like a smart speaker, a smart coffee machine, and a smart printer. The terminal device may be a wireless device in the foregoing various scenarios or an apparatus disposed in the wireless device, for example, a communication module, a modem, or a chip in the foregoing device. The terminal device may also be referred to as a terminal, UE, a mobile station (mobile station, MS), a mobile terminal (mobile terminal, MT), or the like. The terminal device may further include a positioning reference device, for example, an automated guided vehicle (automated guided vehicle, AGV) or a device having a similar function. The following uses the terminal device or UE as an example for description.

In this application, a communication apparatus configured to implement a function of the terminal device may be the terminal device, or may be an apparatus that can support a communication device in implementing a function of the terminal device, for example, a chip system. The apparatus may be installed in the terminal device, or may be used in combination with the terminal device. The chip system may include a chip, or may include a chip and another discrete component. In the method in this application, an example in which the communication apparatus configured to implement the function of the terminal device is the terminal device is used for description.

The network device in this application includes an access network device. The access network device may be a device that provides a wireless communication function service, may communicate with a terminal device, and is usually located on a network side. The access network device may be a base station. For example, the access network device in embodiments of this application includes but is not limited to one or a combination of a next generation base station (gNodeB, gNB) in a 5G communication system, a base station in a sixth generation (6th generation, 6G) mobile communication system, a base station in a future mobile communication system, or a network-side device in an O-RAN system, such as a central unit (central unit, CU) node, a distributed unit (distributed unit, DU) node, or a radio unit (radio unit, RU), an access point (access point, AP) in a Wi-Fi system, an evolved NodeB (evolved NodeB, eNB) in an LTE system, a radio network controller (radio network controller, RNC), a NodeB (NodeB, NB), a base station controller (base station controller, BSC), a home base station (for example, a home evolved NodeB, or a home NodeB, HNB), a baseband unit (base band unit, BBU), a transmission reception point (transmission reception point, TRP), a transmission point (transmission point, TP), a base transceiver station (base transceiver station, BTS), a satellite, an unmanned aerial vehicle, and the like. In a network structure, the access network device may include a central unit (central unit, CU) node and/or a distributed unit (distributed unit, DU) node, or may be a RAN device including a control plane CP (referred to as CU-CP) node, a user plane CU (referred to as CU-UP) node, and a DU node. Optionally, an AI module may be deployed on the CP and/or the DU, or an AI module may be deployed on the CU-CP and/or the CU-UP; or the access network device may be a radio controller in a cloud radio access network (cloud radio access network, CRAN) scenario, a relay station, an in-vehicle device, a wearable device, or the like. In addition, the base station may be a macro base station, a micro base station, a relay node, a donor node, or a combination thereof. The base station may alternatively be a communication module, a modem, or a chip disposed in the foregoing device or apparatus. The base station may alternatively be a mobile switching center, a device that performs a base station function in device-to-device (device-to-device, D2D), vehicle-to-everything (vehicle-to-everything, V2X), or machine-to-machine (machine-to-machine, M2M) communication, a network device in a 6G network, a device that performs a base station function in a future communication system, or the like. The base station can support networks using a same access technology or different access technologies. This is not limited. The base station may be fixed or mobile. For example, a helicopter or an uncrewed aerial vehicle may be configured as a mobile base station, and one or more cells may move based on a location of the mobile base station. In another example, a helicopter or an uncrewed aerial vehicle may be configured as a device for communicating with another base station.

The access network device and the terminal device may be deployed on land, and include an indoor or outdoor device, a handheld device, or a vehicle-mounted device; may be deployed on water; or may be deployed on a plane, a balloon, or a satellite in air. Scenarios in which the access network device and the terminal device are located are not limited in embodiments of this application. In addition, each of the terminal device and the access network device may be a hardware device, a software function running on dedicated hardware, a software function running on general-purpose hardware, for example, a virtualization function instantiated on a platform (for example, a cloud platform), or an entity including a dedicated or general-purpose hardware device and a software function. Specific forms of the terminal device and the access network device are not limited in this application.

In addition, the network device in this application further includes a core network element, for example, a location management function network element. Optionally, the core network element may further include an AMF. For details, refer to descriptions in the following specific embodiments.

An apparatus configured to implement a function of the network device may be the network device, or may be an apparatus that can support a communication device in implementing a corresponding function of the network device in this application, for example, a chip system, a hardware circuit, a software module, or a hardware circuit and a software module. The apparatus may be installed in the network device or used in combination with the network device. In the method in this application, an example in which the apparatus configured to implement the function of the network device is the network device is used for description.

Optionally, the communication system may further include a network element having an artificial intelligence function. A step related to an AI model design, for example, one or more of a data collection step (for example, collecting training data and/or inference data), a model training step, and a model inference step, may be performed by one or more network elements having an artificial intelligence function. In a possible design, the AI function (for example, an AI module or an AI entity) may be configured in an existing network element in the communication system, to implement an AI-related operation, for example, AI model training and/or inference. For example, the existing network element may be an access network device (for example, a gNB), a terminal device, a core network device, a network management system, or the like. The network management system can detect a network running status, optimize network connections and performance, improve network running stability, and reduce network maintenance costs. Alternatively, in another possible design, an independent network element may be introduced into the communication system to perform an Al-related operation, for example, AI model inference. The independent network element may be referred to as an AI network element, an AI node, or the like. The name is not limited in this application. The AI network element may be directly connected to the access network device in the communication system, or may be indirectly connected to the access network device via a third-party network element. The third-party network element may be a core network device, for example, an authentication management function (authentication management function, AMF) network element or a user plane function (user plane function, UPF) network element, the network management system, a cloud server, or another network element. This is not limited. Optionally, the AI network element may be a hardware device, a software function running on dedicated hardware, a software function running on general-purpose hardware, for example, a virtualization function instantiated on a platform (for example, a cloud platform), or an entity including a dedicated or general-purpose hardware device and a software function. Optionally, the AI network element may be located in a server, for example, located in a host or a cloud server of an OTT system.

The following describes a method for sending information according to this application.

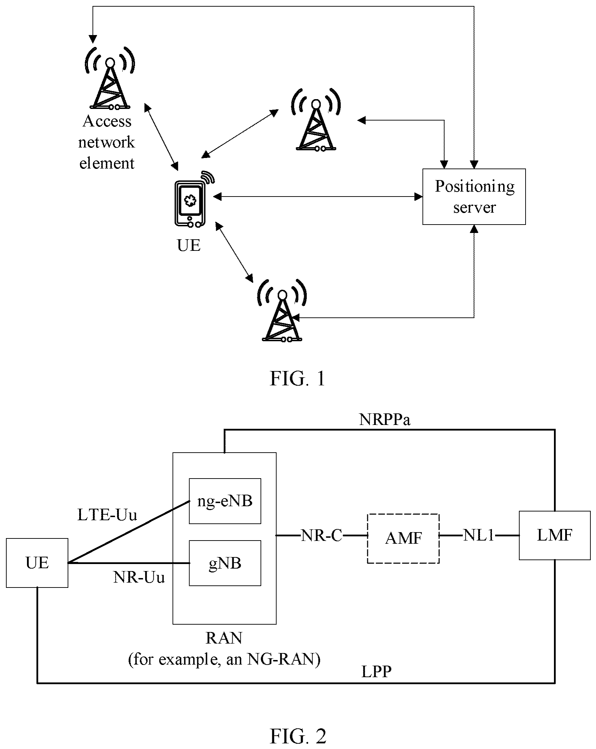

The technical solutions of this application may be applied to various wireless positioning scenarios. For example, FIG. 1 is an example of a wireless positioning system to which an embodiment of this application is applicable. As shown in FIG. 1, the wireless positioning system mainly includes an access network device, a terminal device, and a positioning server. The positioning server is mainly responsible for receiving a positioning service request, collecting a positioning-related measurement result, calculating a positioning result, providing a corresponding wireless positioning service, and the like. Optionally, the positioning server may receive a positioning service request from the access network device or an upper-layer application. In an example, the positioning server may be a location management function network element, for example, an LMF. For the access network device and the terminal device, refer to the foregoing descriptions.

FIG. 2 is a diagram of network elements according to an embodiment of this application. As shown in FIG. 2, network elements in this application include UE, a location management function network element, and an access network device. Optionally, an access and mobility management function (access management function, AMF) network element is also included. In an example, the access network device may be an ng-eNB or a gNB, where the ng-eNB represents a 4G base station that can access a 5G core network, the gNB represents a 5G base station, and both the ng-eNB and the gNB are NR-RAN network elements. A radio access network device or a base station mentioned in this embodiment of this application may be an ng-eNB or a gNB. This is not limited. The UE communicates with the radio access network device by using a corresponding interface. For example, the UE communicates with the gNB by using an NR-Uu interface, and the UE communicates with the ng-eNB by using an LTE-Uu interface. In this embodiment of this application, the NR-Uu interface and the LTE-Uu interface are configured to transmit positioning-related signaling and/or data. In addition, the gNB communicates with the AMF and the ng-eNB communicates with the AMF through an NG-C interface, for example, transmits positioning-related signaling. The AMF communicates with the LMF through an NL1 interface, for example, transmits positioning-related signaling. Optionally, an interaction between the UE and the LMF is based on the LTE positioning protocol (LTE positioning protocol, LPP) protocol, an interaction between the NG-RAN and the LMF is based on the NRPPa protocol, and the NRPPa protocol is transparently transmitted across the AMF. It should be understood that the NG-RAN is merely used as an example. When the technical solutions of this application are applied to a future wireless communication system, for example, a 6G system, the NG-RAN is correspondingly an access network device in the 6G system. Similarly, names of network elements, names of interfaces between network elements, message names, and the like are merely examples. In a future wireless communication system, network elements, interfaces, and interface messages that have a same or similar function may be used to implement the technical solutions of this application.

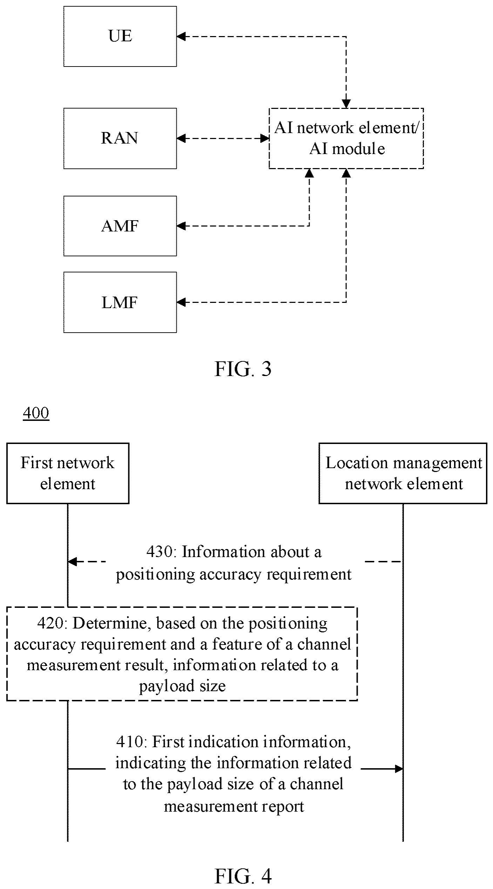

In addition, to support a machine learning function in a wireless communication system, an AI network element or an AI module may also be introduced into the wireless communication system. FIG. 3 is a diagram of an AI/ML network element or module. If an AI network element is introduced, it indicates that the AI network element corresponds to an independent network element. If an AI module is introduced, the AI module may be located inside a network element. As mentioned above, network elements in embodiments of this application include UE, a radio access network device, and an LMF, and optionally, may further include an AMF. An AI module may be disposed inside one or more of the UE, the radio access network device, the AMF (if this network element is involved), and the LMF, or a corresponding AI network element is introduced into one or more of the UE, the radio access network device, the AMF, and the LMF, or the two manners are used in combination. This is not limited. It should be understood that if a corresponding AI network element is introduced into one or more of the UE, the radio access network device, the AMF, and the LMF, and an AI operation is performed by the corresponding AI network element, the UE, the radio access network device, the AMF, or the LMF needs to send AI operation-related information to the corresponding AI network element. For example, a corresponding AI network element is introduced into the LMF, and the AI network element performs an inference operation of an AI positioning model. In this case, after receiving a channel measurement report from a first network element (for example, the access network device or the UE), the LMF sends a channel measurement result carried in the channel measurement report to the corresponding AI network element. For another example, in uplink positioning, if a corresponding AI network element is introduced into the access network device, it is assumed that an input of the AI positioning model is a channel feature extracted from a channel measurement result, and that the channel measurement result is obtained by the access network device by measuring an SRS of the UE. Therefore, after obtaining the channel measurement result, the access network device sends the channel measurement result to the corresponding AI network element. The AI network element extracts the channel feature from the channel measurement result by using the AI model, and then returns the extracted channel feature to the access network device. Then the access network device sends the channel feature to the LMF.

In a research process of this application, it is found that a decrease in overheads of information related to a payload size of a channel measurement report under different channel conditions (it should be noted that the payload size of the channel measurement report is a size of a payload of the channel measurement report, and for brevity of description, the payload size of the channel measurement report is used for description in this specification) has different degrees of impact on inference accuracy of the AI positioning model. The following uses an example for description with reference to Table 1. Table 1 is a schematic description of a research result of this application.

**Table 1**

| Input of the AI positioning model (path quantity) | Output of the AI positioning model | Example of the channel condition | Positioning accuracy |
|---|---|---|---|
| 256 | Location of the UE | Channel condition 1 | 0.84 |
| 256 | Location of the UE | Channel condition 2 | 0.88 |
| 32 | Location of the UE | Channel condition 1 | 0.92 |
| 32 | Location of the UE | Channel condition 2 | 1.68 |

For example, the AI positioning model is deployed on the location management function network element, and the AI positioning model uses multipath information as an input and uses a location of the UE as an output. The multipath information may be sent by a channel network element to the location management function network element by using the channel measurement report. The multipath information is the payload of the channel measurement report. Therefore, the payload size of the channel measurement report actually determines reporting overheads of the channel measurement report. In Table 1, a path quantity is used as an example of a feature of the multipath information, that is, the information related to the payload size of the channel measurement report. The payload size of the channel measurement report is related to the path quantity. For example, if the path quantity is larger, the payload size is also correspondingly larger. Optionally, the multipath information may also include a representation overhead of information about each path. Similarly, given the same path quantity, if the representation overhead of the information about each path is larger, the payload size is also correspondingly larger. However, different representation overheads of the information about each path have different degrees of impact on positioning accuracy of the AI positioning model.

The following can be learned from Table 1:
(1) When a non-line-of- sight (non-line-of-sight, NLOS) degree is relatively severe, for example, when an NLOS proportion under a channel condition 1 is approximately 99%, and an input of the AI positioning model is reduced from information about 256 paths to information about 32 paths, there is little impact on positioning accuracy. For example, in Table 1, under the channel condition 1, when an input of the AI positioning model is 256 paths, positioning accuracy is 0.84; and when an input of the AI positioning model is 32 paths, positioning accuracy is 0.92, and the positioning accuracy is still at a level less than 1 meter (that is, a submeter level).
(2) When an NLOS degree is relatively low, for example, when an NLOS proportion under a channel condition 2 is approximately 40%, and an input of the AI positioning model is reduced from information about 256 paths to information about 32 paths, there is great impact on positioning accuracy. For example, in Table 1, under the channel condition 2, when an input of the AI positioning model is 256 paths, positioning accuracy is 0.88; and when an input of the AI positioning model is 32 paths, positioning accuracy is 1.68, and the positioning accuracy is reduced from the submeter level to 1.68 meters.

The foregoing research result of this application indicates that, under different channel conditions, input overheads required by the AI positioning model to ensure positioning accuracy may vary. For example, under the channel condition 1 shown in Table 1, the AI positioning model may require an input of information about 32 paths to ensure submeter-level positioning accuracy; and under the channel condition 2, the AI positioning model requires an input of information about 256 paths to ensure submeter-level positioning accuracy. It should be understood that the input of the AI positioning model is the payload of the channel measurement report reported by the channel measurement network element. Based on the foregoing research result, this application proposes that channel measurement reports with different payload sizes should be reported under different channel conditions to support a requirement for relatively low reporting overheads, provided that a positioning accuracy requirement can be ensured. For example, in the example of Table 1, under the same channel condition 1, both information about 256 paths and information about 32 paths may be used as inputs of the AI positioning model to ensure a submeter-level positioning accuracy requirement. In this case, the channel measurement network element may report information about 32 paths.

Optionally, in the foregoing Table 1, different path quantities are used as inputs of the AI positioning model. The AI positioning model may be a same AI positioning model, or may include a plurality of AI positioning models for different path quantities. In other words, one AI positioning model may indicate an input of multipath information about one or more path quantities. For example, under the channel condition 1, an AI positioning model that uses information about 256 paths as an input may be an AI positioning model 1, and an AI positioning model that uses information about 32 paths as an input may be the AI positioning model 1 or may be an AI positioning model 2. The AI positioning model 1 and the AI positioning model 2 may be AI positioning models in a model library of the location management function network element.

In this application, the channel measurement report is used to report a channel measurement result (or a channel feature extracted from the channel measurement result, where the channel measurement result is used as an example for description in each embodiment), and the channel measurement result is used by the location management function network element to perform an Al-related operation, for example, model inference based on the AI positioning model. Therefore, the AI positioning model uses the channel measurement result (or the channel feature extracted from the channel measurement result) as an input, and uses a location of the UE as an output. Therefore, a purpose of the channel measurement report is to report the input of the AI positioning model. Based on this premise, the payload of the channel measurement report in this application actually carries the input of the AI positioning model. Based on the foregoing inventive concept, under different channel conditions, the channel measurement network element feeds back information related to a payload size of a channel measurement report to the location management function network element, so that the channel measurement network element can be supported in reporting channel measurement reports with different payload sizes to the location management function network element, to support a flexible payload format and further support a requirement for relatively low reporting overheads, provided that the positioning accuracy is ensured.

Based on the foregoing inventive concept, the following describes the technical solutions of this application in detail.

FIG. 4 is a schematic flowchart of a method 400 for sending information according to this application. The method 400 may be performed by a corresponding network element, or may be performed by a chip or a circuit. This is not limited. The following uses execution by a network element as an example for description.

In the method described in FIG. 4, a first network element sends first indication information to a location management function network element, where the first indication information indicates information related to a payload size of a channel measurement report.

410: A first network element sends first indication information to a location management function network element, where the first indication information indicates information related to a payload size of a channel measurement report.

The information related to the payload size includes one or more of the following:
a path quantity corresponding to one or more paths; and
a bit quantity corresponding to information about each of the one or more paths.

Optionally, information about a first path of the one or more paths includes one or more of the following information about the first path: amplitude and phase information, amplitude information, phase information, or angle information, and the first path is any one of the one or more paths.

Alternatively, in this application, information related to different payload sizes may also be referred to as different payload formats. For example, the information related to the payload size includes information about the path quantity corresponding to the one or more paths. For example, the information related to the payload size includes information about 16 paths, information about 32 paths, information about 64 paths, information about 128 paths, and information about 256 paths, which are different payload formats. Alternatively, the information related to the payload size includes information about the bit quantity corresponding to the information about each path. For example, bit quantities corresponding to the information about each path included in the information related to the payload size are 16, 32, 64, 128, and 256 respectively, which are different payload formats. Alternatively, the information related to the payload size includes the path quantity and the bit quantity corresponding to the information about each path, and different path quantities and different bit quantities corresponding to the information about each path are different payload formats. For example, the information related to the payload size includes information about 16 paths, information about each path corresponds to 16 bits, the information related to the payload size includes information about 32 paths, and information about each path corresponds to 64 bits, which are different payload formats. It can be learned that, in this embodiment of this application, a payload format is very flexible.

Further, the first network element sends the channel measurement report to the location management function network element.

The channel measurement report and the first indication information may be carried in a same message, or may be carried in different messages.

In this application, the first network element sends, to the location management function network element, an indication of the information related to the payload size of the channel measurement report, so that the first network element can report information related to different payload sizes under different channel conditions, to support a flexible payload format, thereby supporting a requirement for relatively low reporting overheads of the channel measurement report, provided that positioning accuracy is ensured.

In addition, "a network element A sends information A to a network element B" in embodiments of this application, for example, "the first network element sends the first indication information to the location management function network element", may be understood as: a destination of the information A or an intermediate network element in a transmission path to the destination is the network element B, and the sending may include directly or indirectly sending the information to the network element B. "The network element B receives the information A from the network element A", for example, "the location management function network element receives the first indication information from the first network element", may be understood as: a source of the information A or an intermediate network element in a transmission path from the source is the network element A, and the receiving may include directly or indirectly receiving the information from the network element A. Necessary processing, such as a format change, may be performed on the information between the source and the destination for information sending, but the destination can understand valid information from the source. Similar descriptions in this application may be construed in a similar manner, and details are not described herein again.

Optionally, the method 400 may further include step 420, and step 420 may be performed before step 410.

420: The first network element determines, based on a positioning accuracy requirement and a feature of a channel measurement result, the information related to the payload size.

Optionally, the channel measurement result may include one or more of a channel impulse response (channel impulse response, CIR), a channel frequency response (channel frequency response, CFR), and a power delay profile (power delay profile, PDP). This is not limited.

In addition, quantities of sampling points of the CIR and the PDP are not limited either. The CIR may include one or more of the following: multiple time-aligned CIR sequences, a cross-correlation sequence of multiple CIR sequences, a normalized CIR, and the like.

A bandwidth, a subband, a quantity of ports, or the like corresponding to the CIR, the CFR, or the PDP is not limited either. The CFR may include a normalized CFR.

In this application, the channel measurement result (or the feature of the channel measurement result) may reflect an NLOS degree of a channel environment. It can be learned from the foregoing description of the inventive concept that if NLOS degrees (that is, different channel conditions) are different, degrees of impact of the information related to the payload size of the channel measurement report on inference accuracy of an AI positioning model are different. Therefore, the first network element may learn of an NLOS degree of a channel based on the feature of the channel measurement result, to learn of a current channel condition. The first network element may determine information related to different payload sizes under different channel conditions, provided that the positioning accuracy requirement is ensured.

The channel measurement result and the corresponding feature may meet at least one item, that is, at least one row, in the following Table 2.

**Table 2**

| Channel measurement result | Feature of the channel measurement result | The feature of the channel measurement result is used to determine the channel environment |
|---|---|---|
| CIR or PDP | A quantity of paths whose energy exceeds 1/2 (an energy proportion is merely used as an example) of energy of the first path (a criterion for determining the first path is not limited) in all sampled paths | It may be used to determine the NLOS degree of the channel environment. |
| CIR or PDP | An LOS probability is identified based on the CIR or the PDP | The LOS probability may be used to determine the NLOS degree of the channel environment. |
| CFR | Interference level, RSRP, or the like of a full band and/or subband of the CFR | An interference level of the current channel environment is determined based on the interference level, RSRP, or the like of the full band and/or subband of the CFR, so that the NLOS degree of the current channel environment is determined. |
| CIR, PDP, or CFR | Rician K-factor and/or Doppler frequency measurement result determined based on the CIR, the PDP, or the CFR | A multipath condition of the current channel environment is determined based on the Rician K-factor and/or the Doppler frequency measurement result. |
| CIR, PDP, or CFR | One or more of delay spread information, angle spread information, angle-delay-power information, or the like determined based on the CIR, the PDP, or the CFR | The smaller the delay spread or angle spread, the closer to a pure LOS path. Therefore, the multipath condition of the current channel environment can be determined. |

In this embodiment of this application, the CIR may include amplitude and phase information in a time-domain sampling point dimension of a signal obtained by measuring a reference signal. The PDP may include amplitude information in a time-domain sampling point dimension of a signal obtained by measuring a reference signal.

In Table 2, the Rician K-factor (K-factor, KF) is defined as a ratio of a sum of power of LOS paths to a sum of power of NLOS paths in multiple paths. Same as a shadow fading factor (shadow fading, SF), the KF is also related to a geometric position on a map. When the UE moves to different locations, the KF of the UE changes accordingly. In this case, the multipath power also changes with the location.

It should be understood that channel propagation conditions are generally classified into two types: LOS path and NLOS path.

Channel propagation condition of the LOS path: a scenario in which a line-of-sight path exists, but an NLOS path may also be included. In other words, at least one LOS path (that is, a pure LOS path (pure LOS)) exists, but a quantity of NLOS paths is not limited. An overall feature is that energy of the LOS path is higher than a sum of energy of the NLOS paths. Generally, the KF is used to define a ratio of a sum of power of LOS paths to a sum of power of NLOS paths.

Channel propagation condition of the NLOS path: a scenario in which no line-of-sight path exists, that is, only an NLOS path exists.

Therefore, it can be said that a higher Rician K-factor indicates higher energy of the LOS path relative to energy of the NLOS path, and a poorer multipath condition.

It can be learned from the foregoing description of the information related to the payload size that, determining the information related to the payload size of the channel measurement report by the first network element may be specifically determining the path quantity corresponding to the one or more paths carried in a payload of the channel measurement report, for example, information about 256 paths is carried or information about 32 paths is carried. Further, the first network element may further determine a bit quantity corresponding to each of the carried one or more paths. For example, assuming that it is determined that the payload of the channel measurement report carries information about 32 paths, information about each of the 32 paths is represented by using a quantity of bits. For example, information about each path may be represented by using 16 bits, 32 bits, or 64 bits. When more bits are used to represent information about a path, accuracy of the represented information about the path is higher. For example, accuracy of information about a path represented by 32 bits is higher than accuracy of information about a path represented by 16 bits.

In an example, the first network element may determine, based on a mapping relationship, the information related to the payload size. Optionally, the mapping relationship may be any one of the following: a mapping relationship between a positioning accuracy level and the information related to the payload size; a mapping relationship between a channel condition and the information related to the payload size; or a mapping relationship between a positioning accuracy level, a channel condition, and the information related to the payload size.

The first network element determines, based on the mapping relationship, the information related to the payload size corresponding to the current positioning accuracy level and/or the current channel condition. The channel condition may be determined based on the feature of the channel measurement result. In other words, the feature of the channel measurement result may reflect the channel condition, and the positioning accuracy requirement may correspond to a positioning accuracy level in the mapping relationship. Therefore, after obtaining the channel measurement result by performing a channel measurement, the first network element may determine the feature of the channel measurement result, and then may determine, based on the mapping relationship, and the current positioning accuracy requirement and/or the current channel condition, the information related to the payload size of the channel measurement report.

It may be understood that the feature of the channel measurement result may include one or more items in Table 3. A mapping relationship corresponding to each feature of the channel measurement result, that is, a mapping relationship between a channel condition and/or a positioning accuracy level and information related to a payload size, may meet at least one item in Table 3.

**Table 3**

| Feature of the channel measurement result | Channel condition corresponding to the channel measurement result (for example, NLOS proportions are different) | Positioning accuracy level | Information related to the payload size of the channel measurement report (path quantity) |
|---|---|---|---|
| Quantity of paths whose energy exceeds 1/2 of the energy of the first path (the energy proportion is merely used as an example) in all sampled paths that are obtained based on the CIR or the PDP | Channel condition 1 | 1 | 256 |
| | | 2 | 64 |
| | Channel condition 2 | 1 | 64 |
| | | 2 | 32 |
| An LOS probability is identified based on the CIR or the PDP | Channel condition 1 | 1 | 128 |
| | | 2 | 32 |
| | Channel condition 2 | 1 | 64 |
| | | 2 | 16 |
| Interference level, RSRP, or the like of a full band and/or subband of the CFR | Channel condition 1 | 1 | 256 |
| | | 2 | 32 |
| | Channel condition 2 | 1 | 64 |
| | | 2 | 32 |
| Rician K-factor and/or Doppler frequency measurement result determined based on the CIR, the PDP, or the CFR | Channel condition 1 | 1 | 256 |
| | | 2 | 32 |
| | Channel condition 2 | 1 | 32 |
| | | 2 | 16 |
| Delay spread information, angle spread information, angle-delay-power information, or the like determined based on the CIR, the PDP, or the CFR | Channel condition 1 | 1 | 256 |
| | | 2 | 128 |
| | | 3 | 32 |
| | Channel condition 2 | 1 | 128 |
| | | 2 | 32 |

It should be understood that Table 3 lists a plurality of features of the channel measurement result. The first network element may determine a channel condition based on one or more of the features, and determine, with reference to the positioning accuracy level, the information related to the payload size of the channel measurement report. For example, assuming that the feature of the channel measurement result is delay spread information, the first network element may determine the NLOS degree of the current channel environment based on the delay spread information about the channel measurement result. In an example, assuming that the NLOS degree of the current channel environment corresponds to a channel condition 1, and that the positioning accuracy requirement corresponds to a positioning accuracy level 1, the first network element may determine that the information related to the payload size of the channel measurement report includes information about 256 paths. For another example, assuming that the NLOS degree of the current channel environment corresponds to the channel condition 1, but the positioning accuracy requirement corresponds to a positioning accuracy level 3, the first network element may determine that the information related to the payload size of the channel measurement report includes information about 32 paths.

Optionally, the information related to the payload size of the channel measurement report may include the bit quantity corresponding to the information about each path. The following uses Table 4 as an example for description. It may be understood that the feature of the channel measurement result may include one or more items in Table 4. A mapping relationship corresponding to each feature of the channel measurement result, that is, a mapping relationship between a channel condition and/or a positioning accuracy level and information related to a payload size, may meet at least one item in Table 4.

**Table 4**

| Feature of the channel measurement result | Channel condition corresponding to the channel measurement result | Positioning accuracy level | Payload size of the channel measurement report (bit quantity corresponding to the information about each path) |
|---|---|---|---|
| Quantity of paths whose energy exceeds 1/2 of the energy of the first path (the energy proportion is merely used as an example) in all sampled paths that are obtained based on the CIR or the PDP | Channel condition 1 | 1 | 256 |
| | | 2 | 64 |
| | Channel condition 2 | 1 | 128 |
| | | 2 | 32 |
| An LOS probability is identified based on the CIR or the PDP | Channel condition 1 | 1 | 128 |
| | | 2 | 32 |
| | Channel condition 2 | 1 | 256 |
| | | 2 | 32 |
| Interference level, RSRP, or the like of a full band and/or subband of the CFR | Channel condition 1 | 1 | 256 |
| | | 2 | 32 |
| | Channel condition 2 | 1 | 64 |
| | | 2 | 32 |
| Rician K-factor and/or Doppler frequency measurement result determined based on the CIR, the PDP, or the CFR | Channel condition 1 | 1 | 256 |
| | | 1 | 32 |
| | Channel condition 2 | 1 | 32 |
| | | 2 | 16 |
| Delay spread information, angle spread information, angle-delay-power information, or the like determined based on the CIR, the PDP, or the CFR | Channel condition 1 | 1 | 256 |
| | | 2 | 128 |
| | | 3 | 32 |
| | Channel condition 2 | 1 | 256 |
| | | 2 | 32 |

In the example in Table 4, determining, by the first network element based on the positioning accuracy requirement and the channel condition, the information related to the payload size of the channel measurement report may be specifically determining how many bits are used to represent reported information about each path. For example, the first network element determines, based on the delay spread information, that the current channel condition is the channel condition 1. If the positioning accuracy requirement corresponds to the positioning accuracy level 1, the first network element may determine, based on the mapping relationship, that the reported information about each of the one or more paths is represented by using 256 bits. However, under the channel condition 2, if the positioning accuracy level 1 needs to be reached, the first network element may determine that the reported information about each path is represented by using 128 bits.

Optionally, the information related to the payload size of the channel measurement report may include the path quantity and the bit quantity corresponding to the information about each path, as shown in an example in Table 5. It may be understood that the feature of the channel measurement result may include one or more items in Table 5. A mapping relationship corresponding to each feature of the channel measurement result, that is, a mapping relationship between a channel condition and/or a positioning accuracy level and information related to a payload size, may meet at least one item in Table 5.

**Table 5**

| Feature of the channel measurement result | Channel condition corresponding to the channel measurement result (for example, NLOS degrees are different) | Positioning accuracy level | Payload size of the channel measurement report (path quantity and bit quantity corresponding to the information about each path) |
|---|---|---|---|
| Delay spread information, angle spread information, angle-delay-power information, or the like determined based on the CIR or the CFR | Channel condition 1 | 1 | (256, 16)/(256, 64) |
| | | 2 | (128, 64)/(128, 16) |
| | | 3 | (32, 32) |
| | Channel condition 2 | 1 | (256, 16)/(256, 64) |
| | | 2 | (32, 16)/(32, 64) |

In Table 5, only the delay spread information, the angle spread information, or the angle-delay-power information is used as an example for description, and another feature of the channel measurement result is also applicable. In Table 5, assuming that the first network element determines, based on the feature of the channel measurement result, that the current channel condition corresponds to the channel condition 1, and that the positioning accuracy requirement corresponds to the positioning accuracy level 3, the first network element may determine that the information related to the payload size includes information about 32 paths, and that information about each of the 32 paths corresponds to 32 bits. Optionally, assuming that the current channel condition determined based on the feature of the channel measurement result is the channel condition 1, and that the positioning accuracy requirement corresponds to positioning accuracy level 2, the first network element may determine that there may be two options for the information related to the payload size of the channel measurement report: (128, 64) or (128, 16), both of which can meet the positioning accuracy requirement. In this case, the first network element selects (128, 16), so that reporting overheads of the channel measurement report can be reduced.

Optionally, when determining the information related to the payload size of the channel measurement report, the first network element may further consider another positioning-related requirement in addition to meeting the positioning accuracy requirement. In some examples, the channel condition 1 and the positioning accuracy level 2 in Table 5 are used as an example. If a transmission delay requirement for the channel measurement report is high (that is, a low delay is required), the first network element selects (128, 16) as the information related to the payload size, because compared with (128, 64), a total bit quantity corresponding to (128, 16) is smaller, and a transmission delay is lower. Alternatively, if high reliability of positioning accuracy assurance is required, the first network element selects (128, 64) as the information related to the payload size, because compared with (128, 16), (128, 64) includes more channel measurement information, so that the positioning accuracy can be ensured more reliably. This is merely an example herein. The first network element may alternatively use another factor as one of bases for determining the information related to the payload size of the channel measurement report. This is not limited.

In Table 3 to Table 5 above, the technical solution is described by using an example in which the mapping relationship is a mapping relationship between a channel condition, a positioning accuracy level, and information related to a payload size. As mentioned above, the mapping relationship may alternatively be a mapping relationship between a channel condition or a positioning accuracy level and information related to a payload size, and is not limited. Optionally, when the mapping relationship includes a mapping relationship between one of the channel condition and the positioning accuracy level and the information related to the payload size, the other one of the channel condition and the positioning accuracy level may be learned of by the first network element. For example, the mapping relationship is a mapping relationship between the positioning accuracy level and the information related to the payload size, and the channel condition is learned of by the first network element by performing the channel measurement and estimation. For another example, the mapping relationship is a mapping relationship between the channel condition and the information related to the payload size, and the mapping relationship is specific to a positioning accuracy level.

For example, the first network element stores mapping relationships in Table 6 and Table 7. Table 6 is specific to the positioning accuracy level 1, and Table 7 is specific to the positioning accuracy level 2. After the first network element obtains the positioning accuracy requirement from the location management function network element, if the positioning accuracy requirement corresponds to the positioning accuracy level 1, the first network element determines, based on the mapping relationship in Table 6 and the current channel condition, the information related to the payload size of the channel measurement report. If the positioning accuracy requirement corresponds to the positioning accuracy level 2, the first network element determines, based on the mapping relationship in Table 7, the information related to the payload size of the channel measurement report.

**Table 6**

| Channel condition | Information related to the payload size (path quantity) |
|---|---|
| Channel condition 1 | 256 |
| Channel condition 2 | 128 |
| Channel condition 3 | 64 |
| Channel condition 4 | 32 |

**Table 7**

| Channel condition | Information related to the payload size (path quantity) |
|---|---|
| Channel condition 1 | 128 |
| Channel condition 2 | 64 |
| Channel condition 3 | 32 |
| Channel condition 4 | 16 |

For another example, the first network element stores mapping relationships in Table 8 and Table 9. Table 8 is specific to the channel condition 1, and Table 9 is specific to the channel condition 2. The first network element determines the current channel condition by using the channel measurement result obtained by performing the channel measurement. If the channel measurement result corresponds to the channel condition 1, the first network element determines, based on the mapping relationship in Table 8 and with reference to the positioning accuracy requirement obtained from the location management function network element, the information related to the payload size of the channel measurement report.

**Table 8**

| Positioning accuracy requirement | Information related to the payload size (path quantity) |
|---|---|
| Positioning accuracy level 1 | 256 |
| Positioning accuracy level 2 | 128 |
| Positioning accuracy level 3 | 64 |

**Table 9**

| Positioning accuracy requirement | Information related to the payload size (path quantity) |
|---|---|
| Positioning accuracy level 1 | 62 |
| Positioning accuracy level 2 | 32 |
| Positioning accuracy level 3 | 16 |

It can be learned from the description in step 410 that the first network element sends the channel measurement report to the location management function network element, and indicates, by using the first indication information, the information related to the payload size of the channel measurement report, so that a flexible payload format can be supported, thereby supporting a requirement for relatively low reporting overheads of the channel measurement report.

Optionally, before step 420, the method may further include step 430.

430: The first network element receives information about the positioning accuracy requirement from the location management function network element.

In an example, the positioning accuracy requirement based on which the first network element determines the information related to the payload size of the channel measurement report may be sent by the location management function network element to the first network element. For example, a measurement request sent by the location management function network element to the first network element carries the information about the positioning accuracy requirement, or the information about the positioning accuracy requirement is sent to the first network element by using another piece of information different from the measurement request. This is not limited.

Optionally, the method 400 may further include: the location management function network element sends a measurement request to the first network element. The measurement request indicates the first network element to perform the channel measurement. In other words, the measurement request is used to trigger the first network element to perform the channel measurement.

Optionally, in an uplink positioning scenario, the first network element is an access network device, and the channel measurement result is based on a first channel measurement. The first channel measurement may be that the access network device measures a sounding reference signal from a terminal device. In a downlink positioning scenario, the first network element is a terminal device, and the channel measurement is based on a second channel measurement. The second channel measurement may be that the terminal device measures a positioning reference signal from an access network device.

In the method 400, the first network element sends the first indication information to the location management function network element, where the first indication information indicates the information related to the payload size of the channel measurement report (that is, a payload format). In this way, the first network element can support a flexible payload format, to support a requirement for relatively low reporting overheads of the channel measurement report. Further, the information related to the payload size may be determined by the first network element based on the positioning accuracy requirement and the feature of the channel measurement result. Therefore, based on different channel conditions and different positioning accuracy requirements, payload formats determined by the first network element are also different. Therefore, provided that the positioning accuracy requirement is met, a relatively small payload size may be designed for the channel measurement report based on the channel condition, to meet a requirement for relatively low reporting overheads of the channel measurement report.

Optionally, the first network element may further send the channel measurement report to the location management function network element, where the information related to the payload size of the channel measurement report is indicated by the first indication information. In other words, the first network element sends the channel measurement report and the first indication information to the location management function network element, where the first indication information indicates the information related to the payload size of the channel measurement report.

Optionally, in another possible implementation, the first network element sends the first indication information to the location management function network element, where the first indication information indicates the information related to the payload size. After receiving the first indication information, the location management function network element may feed back an accept or reject message to the first network element based on a status of an AI positioning model stored in a model library. For example, the information related to the payload size indicated by the first indication information includes information about 256 paths, and the location management function network element feeds back an accept message or a response message based on whether a corresponding AI positioning model is stored in the model library. For example, if the location management function network element stores an AI positioning model corresponding to the information about 256 paths (or the AI positioning model uses the information about 256 paths as an input), the location management function network element returns an accept message to the first network element; or if the location management function network element does not have an AI positioning model corresponding to the information about 256 paths, the location management function network element returns a reject message to the first network element. If the first network element receives the accept message, the first network element sends the channel measurement report to the location management function network element, where the channel measurement report has the payload size indicated by the first indication information. Optionally, if the location management function network element returns a reject message to the first network element, the location management function network element may further send second indication information to the first network element, where the second indication information is information related to a new payload size. For ease of differentiation, herein, the information related to the payload size indicated by the first indication information sent by the first network element is denoted as information 1 related to the payload size, and the information related to the payload size indicated by the second indication information sent by the location management function network element is denoted as information 2 related to the payload size. The information 2 related to the payload size may be indicated by the location management function network element to the first network element based on a status of an AI positioning model in the model library of the location management function network element. For example, the information 1 related to the payload size includes information about 64 paths, but the location management function network element does not have an AI positioning model corresponding to the information about 64 paths, but has an AI positioning model corresponding to information about 128 paths and information about 256 paths, and the AI positioning model corresponding to the information about 128 paths and the information about 256 paths can also ensure a positioning accuracy requirement. In this case, the location management function network element indicates, by using the second indication information, the information 2 related to the payload size, including the information about 128 paths. Therefore, the first network element sends a channel measurement report to the location management function network element based on the indication of the second indication information, where a payload of the channel measurement report includes the information about 128 paths. Optionally, the location management function network element determines a channel condition based on the received first indication information. When there are a plurality of path quantities corresponding to a plurality of AI models with a same positioning accuracy requirement, and/or there are a plurality of bit quantities for the information about each path, the location management function network element selects information related to a payload size closer to the payload size indicated by the first indication information (based on a consideration of a total payload size), or selects related information closer to the information related to the payload size indicated by the first indication information (based on a consideration of the information related to the payload size alone, for example, the path quantity or the bit quantity for the information about each path), and sends a selection result to the first network element by using the second indication information. In this way, a case in which no AI model matches the channel measurement report sent by the first network element can be avoided.

It can be learned that, in this implementation described below, the first network element first indicates, to the location management function network element, the information related to the payload size, and if the location management function network element accepts the information related to the payload size, sends the corresponding channel measurement report; otherwise, may report the channel measurement report based on the information related to the payload size indicated by the location management function network element.

Optionally, to ensure that the first network element and the location management function network element support at least one same payload size, before the first network element sends the channel measurement report, the first network element and the location management function network element may perform capability exchange. The capability herein refers to information related to payload sizes supported by the first network element and the location management function network element. For example, for the first network element, a capability of the first network element refers to information related to a payload size that the first network element supports in reporting. For the location management function network element, a capability of the location management function network element refers to information related to a payload size that the location management function network element supports in performing AI positioning inference. Certainly, the capability exchange is performed on the basis that the current positioning accuracy requirement is met. For example, when sending the information about the positioning accuracy requirement to the first network element, the location management function network element indicates information related to one or more payload sizes, to indicate information related to one or more payload sizes that can be used for AI positioning inference provided that the current positioning accuracy requirement is met. The information related to the one or more payload sizes may correspond to one or more AI positioning models in the model library of the location management function network element. The first network element selects, from the information related to the one or more payload sizes indicated by the location management function network element, information related to a payload size that is also supported by the first network element for the channel measurement report for sending, and may indicate the information related to the payload size of the channel measurement report, which is specifically one piece of the information related to the one or more payload sizes indicated by the location management function network element.

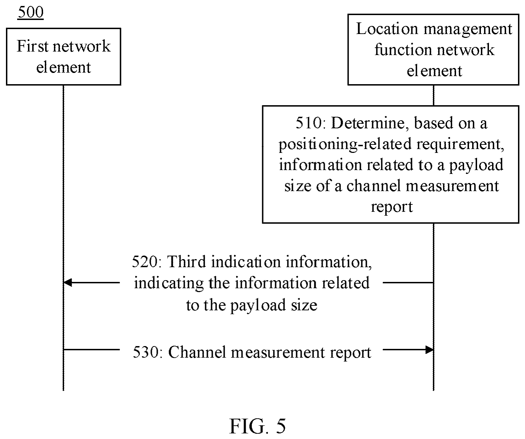

Optionally, the following describes another implementation with reference to FIG. 5. To be specific, the location management function network element indicates the information related to the payload size to the first network element, so that the first network element reports, based on the indication of the location management function network element, the channel measurement report that carries the corresponding information related to the payload size.

FIG. 5 is a schematic flowchart of a method 500 for sending information according to this application. The method 500 may be performed by a corresponding network element, or may be performed by a chip or a circuit. This is not limited. The following uses execution by a network element as an example for description.

510: A location management function network element determines, based on a positioning-related requirement, information related to a payload size of a channel measurement report, where the positioning-related requirement includes at least a positioning accuracy requirement, and the information related to the payload size includes one or more of the following: a path quantity corresponding to one or more paths, or a bit quantity corresponding to information about each of the one or more paths.

When determining, based on the positioning-related requirement, the information related to the payload size of the channel measurement report, the location management function network element may specifically determine the information with reference to information about an AI model library of the location management function network element. It should be noted that the AI model library of the location management function network element is not limited to being stored on the location management function network element, but may also be stored on another network element, for example, a second network element (distinguished from a first network element in this specification). In the following embodiment, an example in which the AI model library is stored on the location management function network element is used for description. In this application, an AI model in the AI model library is used for positioning, and therefore may also be referred to as an AI positioning model.

For example, the AI model library stores a plurality of AI positioning models, and the plurality of AI positioning models separately use information about multiple paths as an input and a location of UE as an output. Optionally, the positioning-related requirement includes at least the positioning accuracy requirement, that is, a positioning accuracy level that can be ensured. In addition, the positioning-related requirement may further include another requirement, for example, a transmission delay requirement for the channel measurement report and a reliability requirement for positioning accuracy assurance, as shown in Table 10.

**Table 10**

| AI positioning model | Positioning accuracy level that can be ensured | Transmission delay requirement level for the channel measurement report | Reliability requirement level for positioning accuracy assurance | Information related to the payload size of the channel measurement report (path quantity) |
|---|---|---|---|---|
| AI model 1 | 1 | 2 | 1 | 256 |
| AI model 2 | 1 | 1 | 2 | 64 |
| AI model 3 | 1 | 2 | 2 | 32 |
| AI model 4 | 2 | 1 | 2 | 32 |
| AI model 5 | 2 | 2 | 1 | 16 |

As shown in Table 10, if a current positioning accuracy requirement of the location management function network element corresponds to a positioning accuracy level 1, and AI models that can ensure the positioning accuracy level 1 include an AI model 1, an AI model 2, and an AI model 3, inputs of the three AI models are respectively information about 256 paths, information about 64 paths, and information about 32 paths. In this case, another positioning-related requirement may also be considered. For example, if the transmission delay requirement for the channel measurement report corresponds to a delay requirement level 2, and the reliability requirement for positioning accuracy assurance corresponds to a level 1 (for example, a low requirement for delay but a high requirement for reliability), the location management function network element determines that the information related to the payload size includes information about 256 paths. For another example, if the current positioning accuracy requirement corresponds to the positioning accuracy level 1, and the transmission delay requirement for the channel measurement report corresponds to a delay requirement level 1, and the reliability requirement for positioning accuracy assurance corresponds to a level 2 (for example, a high requirement for delay but a low requirement for reliability), the location management function network element determines that the information related to the payload size includes information about 64 paths.

That the information related to the payload size in Table 10 includes a path quantity corresponding to multiple paths is merely an example. As described in the foregoing method 400, the information related to the payload size may also include a bit quantity corresponding to information about each of the multiple paths, or the information related to the payload size may include a path quantity corresponding to the multiple paths and a bit quantity corresponding to information about each path. This is not limited. In these different implementations, a process of determining, by the location management function network element based on the positioning-related requirement, the information related to the payload size is similar, that is, determining, based on different positioning-related requirements (for example, different positioning accuracy requirements), information related to different payload sizes, to support the first network element in reporting a channel measurement report by using a flexible payload format, thereby supporting a requirement for relatively low reporting overheads of the channel measurement report.

After determining the information related to the payload size of the channel measurement report, the location management function network element indicates, to the first network element, the information related to the payload size, as shown in step 520.

520: The location management function network element sends third indication information, where the third indication information indicates the information related to the payload size.

530: The location management function network element receives the channel measurement report.

The channel measurement report is reported based on the information related to the payload size indicated by the third indication information. In other words, the payload size of the channel measurement report adapts to or corresponds to the information related to the payload size indicated by the third indication information.

In the method 500, the location management function network element determines, based on the positioning-related requirement (for example, the positioning accuracy requirement), the information related to the payload size of the channel measurement report, and indicates, to a channel measurement network element, the information related to the payload size of the channel measurement report. The information related to the payload size indicated by the location management function network element to the channel measurement network element varies under different positioning-related requirements. Therefore, under different positioning-related requirements, the information related to the payload size of the channel measurement report reported by the channel measurement network element based on the indication of the location management function network element varies. Therefore, a flexible payload format can be supported, so that a requirement for relatively low reporting overheads of the channel measurement report is supported.

Optionally, in the method 500, the location management function network element may adjust, based on performance monitoring of the AI positioning model, the indicated information related to the payload size.

For example, based on the current positioning accuracy requirement, the model library of the location management function network element stores a plurality of AI positioning models that can ensure the current positioning accuracy requirement, and information related to payload sizes corresponding to the plurality of AI positioning models is different. The location management function network element may first indicate, to the channel measurement network element, information related to a payload size corresponding to relatively low reporting overheads. Subsequently, based on performance monitoring of the corresponding AI positioning model, if performance of the AI positioning model cannot meet a performance requirement (for example, the positioning accuracy requirement), the location management function network element may adjust the indicated information related to the payload size, for example, indicate reporting overheads that are slightly higher than previous reporting overheads. One or more adjustments are performed to meet the performance requirement. The following uses an example for description with reference to Table 11.

**Table 11**

| AI positioning model | Positioning accuracy level | Information related to the payload size of the channel measurement report (path quantity corresponding to multiple paths) |
|---|---|---|
| AI positioning model 1 | 1 | 256 |
| AI positioning model 2 | 1 | 64 |
| AI positioning model 3 | 1 | 16 |
| AI positioning model 4 | 2 | 256 |
| AI positioning model 5 | 2 | 64 |
| AI positioning model 6 | 2 | 16 |

For example, all of the AI positioning model 1 to the AI positioning model 3 may meet the positioning accuracy requirement corresponding to the positioning accuracy level 1, but positioning accuracy levels corresponding to the AI positioning model 1 to the AI positioning model 3 may be specific to different channel conditions. In this case, the location management function network element may indicate, to the channel measurement network element, information related to a payload size corresponding to relatively low reporting overheads. For example, the location management function network element indicates information related to a payload size corresponding to the AI positioning model 3, specifically including information about 16 paths. The location management function network element monitors performance of the AI positioning model 3. If it is found that the AI positioning model 3 cannot meet the positioning accuracy requirement, it can be learned from the foregoing research result of this application that the current positioning accuracy requirement cannot be ensured by using the information about 16 paths as an input of the AI positioning model 3 under the current channel condition. In this case, the location management function network element adjusts the indicated information related to the payload size. For example, the location management function indicates, to the channel measurement network element, information related to a payload size corresponding to the AI positioning model 2, specifically including information about 64 paths. Compared with information about 32 paths, the information about 64 paths provides more channel measurement information, which helps improve positioning accuracy. The location management function network element performs an inference operation based on the AI positioning model 2, and monitors performance of the AI positioning model 2. If a performance monitoring result of the AI positioning model 2 indicates that the AI positioning model 2 can meet a current positioning requirement, it indicates that the information about 64 paths reported by the channel measurement network element under the current channel condition as an input of the AI positioning model can meet the current positioning accuracy requirement. If the AI positioning model 2 still cannot meet the current positioning accuracy requirement, the location management function network element may continue to modify the indicated information related to the payload size. For example, the location management function network element indicates information related to a payload size corresponding to the AI positioning model 1, and so on. It can be learned from the foregoing adjustment process that the foregoing adjustment process is actually a process of determining, based on the current channel condition and the positioning accuracy requirement, the information related to the payload size of the channel measurement report, and finally determining the information related to the payload size that can meet the positioning accuracy requirement under the current channel condition. In this way, a flexible payload format can be supported, so that a requirement for relatively low reporting overheads can be supported while the positioning accuracy requirement is met.

It can be learned from the methods described in FIG. 4 and FIG. 5 that, in this embodiment of this application, the first network element (that is, a network element that performs a channel measurement, or channel measurement network element for short) or the location management function network element may determine the information related to the payload size of the channel measurement report. In some examples, the method in FIG. 4 is applicable to a case in which the model library disposed on the location management function network element includes only a few models. In this case, the location management function network element may indicate information about the positioning accuracy requirement to the first network element, and then the first network element determines, based on the positioning accuracy requirement and a feature of a channel measurement result, the information related to the payload size of the channel measurement report. The method in FIG. 5 is applicable to a case in which the model library disposed on the location management function network element includes a relatively large quantity of models. In this case, the location management function network element determines, based on the positioning-related requirement, for example, the positioning accuracy requirement, the information related to the payload size of the channel measurement report, and indicates the information related to the payload size to the first network element. In this way, the first network element can be supported in reporting a flexible payload format, thereby supporting a requirement for relatively low reporting overheads.

The following separately describes application of embodiments of this application in an uplink positioning scenario and a downlink positioning scenario by using examples.

In the following embodiments, an LMF is used as an example of a location management function network element and a base station is used as an example of an access network device, but this is not limited. Alternatively, the location management function network element may be another network element, a module, or the like.
1. A first network element determines information related to a payload size of a channel measurement report.

Optionally, a method used by the first network element to send the channel measurement report to the location management function network element and indicate the information related to the payload size of the channel measurement report, for example, the method 400, may be applied to the uplink positioning scenario, or may be applied to the downlink positioning scenario.

### (1) Uplink positioning

In uplink positioning, model selection and/or inference occur/occurs in the LMF. In an implementation, a model uses a channel measurement result obtained by the base station by measuring an SRS sent by UE as an input, and uses a location of the UE as an output. Optionally, in another possible implementation, the model uses a channel feature extracted from a channel measurement result as an input. This is not limited. In the latter implementation, an AI model may be deployed on a base station side, and the AI model is used to extract a channel feature from a channel measurement result.

It should be noted that, in the following embodiments, information or data transmission between two network elements is not limited to direct transmission, indirect transmission (including transparent transmission), or the like. Therefore, that a network element A sends information to a network element B includes that the network element A directly sends the information to the network element B through an interface between the network element A and the network element B, or may include that the network element A sends the information to a network element C, and the network element C sends the information to the network element B. In addition, a quantity of relays used for forwarding from the network element A to the network element B is not limited. For example, that the UE sends a channel measurement report to the LMF may include a plurality of specific implementations, for example, the UE directly sends the channel measurement report to the LMF by using an LPP message; or the UE sends the channel measurement report to the LMF through the base station; or the UE sends the channel measurement report to the LMF through the base station and an AMF; or the UE sends the channel measurement report to the LMF through an AMF. This is not limited. Interactions between other network elements are similar, which may be understood by a person skilled in the art. Details are not described again. For details about interface messages between the network elements, refer to the description in FIG. 2.

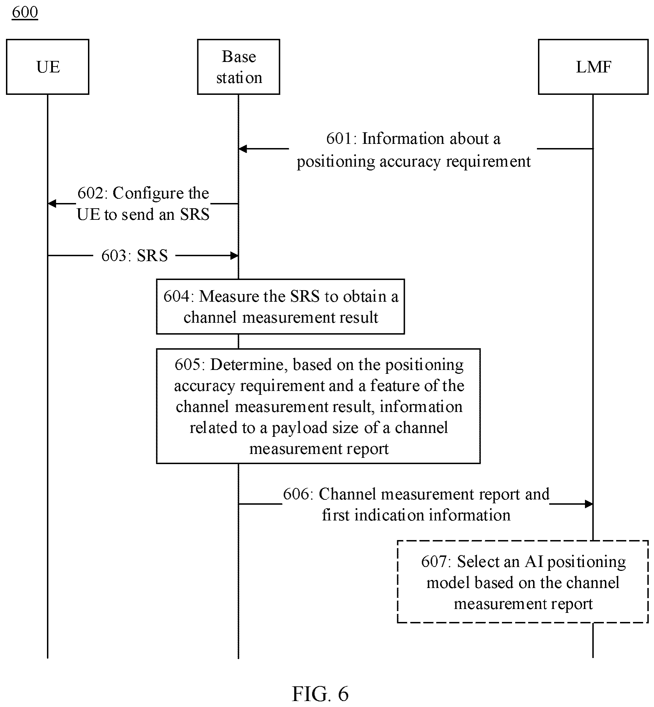

FIG. 6 is an example of application of information sending to uplink positioning according to this application.

601: The LMF sends a measurement request to the base station, where the measurement request carries information about a positioning accuracy requirement.

Optionally, the information about the positioning accuracy requirement may be carried in the measurement request, or may be carried in a message different from the measurement request.

602: Based on the measurement request, the base station configures the UE to send an SRS.

603: The UE sends the SRS.

604: The base station measures the SRS from the UE to obtain a channel measurement result.

605: The base station determines, based on the positioning accuracy requirement and a feature of the channel measurement result, information related to a payload size of a channel measurement report.

For step 605, refer to the description in step 420. Details are not described again.

606: The base station sends the channel measurement report and first indication information to the LMF. The first indication information indicates the information related to the payload size of the channel measurement report.

Optionally, the method may further include step 607.

607: The LMF selects an AI positioning model based on the channel measurement report.

It may be understood that, in this embodiment of this application, selecting an adaptive AI positioning model based on the channel measurement report is actually selecting a corresponding AI positioning model based on the information related to the payload size of the channel measurement report. In other words, if an AI positioning model uses information about multiple paths corresponding to the information related to the payload size as an input, the AI positioning model may be selected for positioning inference. For example, if a payload of the channel measurement report includes information about 32 paths, but an AI positioning model A in a model library of the LMF uses information about 256 paths as an input, and an AI positioning model B uses information about 32 paths as an input, the LMF selects the AI positioning model B for positioning inference.

Optionally, in a possible case, it is assumed that in the model library of the LMF, only an AI positioning model C can meet the positioning accuracy requirement, that is, only one AI positioning model can meet the positioning accuracy requirement, but the AI positioning model C uses information about 256 paths as an input. The LMF indicates the information about the positioning accuracy requirement to the base station. The base station determines, based on the feature of the channel measurement result and the positioning accuracy requirement indicated by the LMF, that the information related to the payload size of the channel measurement report includes information about 32 paths. In this case, the channel measurement report reported by the base station carries the information about 32 paths as a payload. For the LMF, because only the AI positioning model C meets the positioning accuracy requirement, in this case, after zero padding processing is performed on the information about 32 paths in the channel measurement report reported by the base station, the information may be used as an input of the AI positioning model C for positioning inference.

### (2) Downlink positioning

In downlink positioning, model selection and/or inference occur/occurs in the LMF. In an implementation, a model uses a channel measurement result obtained by the UE by measuring a PRS sent by the base station as an input, and uses a location of the UE as an output. Optionally, in another possible implementation, the model uses a channel feature extracted from a channel measurement result as an input. This is not limited. In the latter implementation, an AI model may be deployed on a UE side, and the AI model is used to extract a channel feature from a channel measurement result.

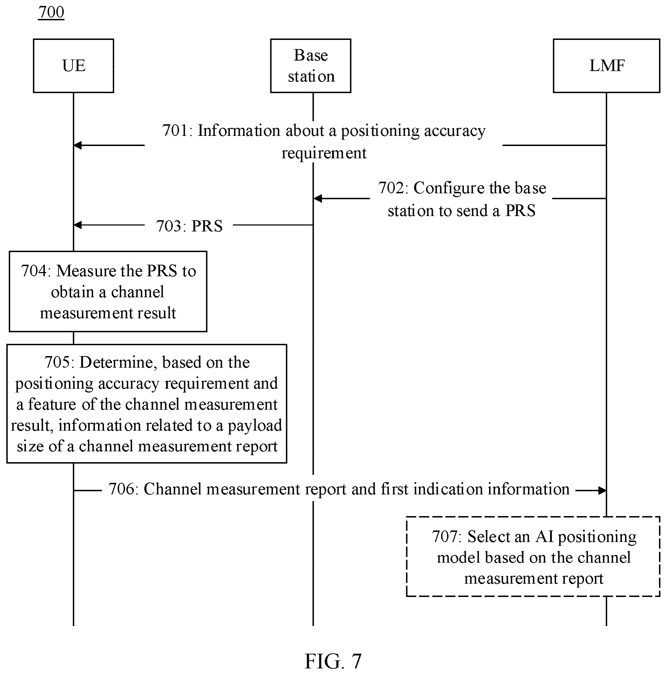

FIG. 7 is an example of application of information sending to downlink positioning according to this application.

701: The LMF sends information about a positioning accuracy requirement to the UE.

Optionally, the positioning accuracy requirement sent by the LMF may be carried in a measurement request sent by the LMF, or may be carried in a message different from a measurement request.

702: The LMF configures the base station to send a PRS.

703: The base station sends the PRS to the UE based on the configuration of the LMF.

704: The UE measures the PRS from the base station to obtain a channel measurement result.

705: The UE determines, based on the positioning accuracy requirement and a feature of the channel measurement result, information related to a payload size of a channel measurement report.

For step 705, refer to the description in step 420. Details are not described again.

706: The UE sends the channel measurement report and first indication information to the LMF, where the first indication information indicates the information related to the payload size of the channel measurement report.

Optionally, the method may further include step 707.

707: The LMF selects an AI positioning model based on the channel measurement report.

In addition, the LMF may use the selected AI positioning model for inference.

2. The location management function network element determines information related to a payload size of a channel measurement report.

Optionally, a method for determining, by the location management function network element, the information related to the payload size of the channel measurement report, and indicating the information related to the payload size to the first network element, for example, the method 500, may be applied to the uplink positioning scenario, or may be applied to the downlink positioning scenario.

### (1) Uplink positioning

In uplink positioning, model selection and/or inference occur/occurs in the LMF. A model uses a channel measurement result (or a channel feature extracted from a channel measurement result) obtained by the base station by measuring an SRS sent by UE as an input, and uses a location of the UE as an output.

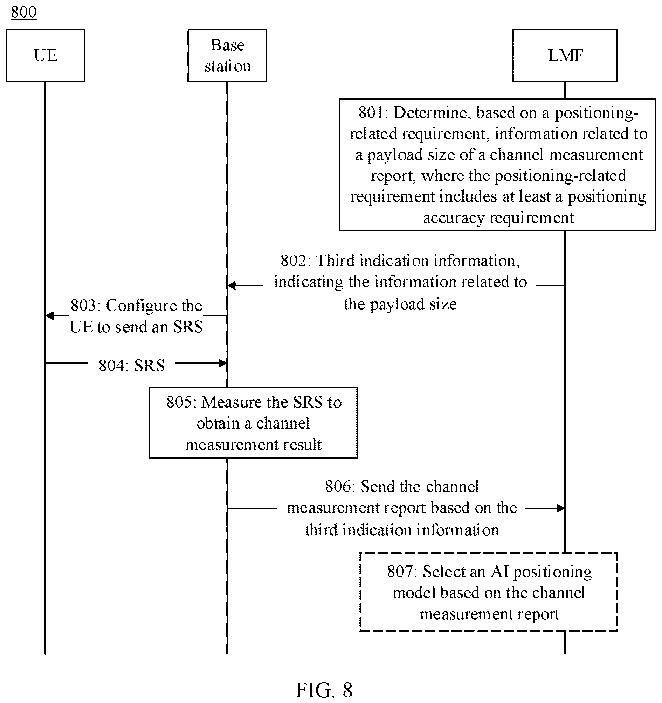

FIG. 8 is an example of application of information sending to uplink positioning according to this application.

801: The LMF determines, based on a positioning-related requirement, information related to a payload size of a channel measurement report.

802: The LMF sends third indication information to the base station, where the third indication information indicates the information related to the payload size.

Optionally, the third indication information may be carried in a measurement request sent by the LMF, or may be carried in a message different from a measurement request.

For details about steps 801 and 802, refer to descriptions in steps 510 and 520. Details are not described again.

803: Based on the measurement request, the base station configures the UE to send an SRS.

804: The UE sends the SRS based on the configuration of the base station.

805: The base station measures the SRS from the UE to obtain a channel measurement result.

806: The base station sends the channel measurement report to the LMF based on the third indication information.

Specifically, the information related to the payload size of the channel measurement report is determined based on the third indication information.

Optionally, the LMF selects an AI positioning model based on the channel measurement report.

### (2) Downlink positioning

In downlink positioning, model selection and/or inference occur/occurs in the LMF. A model uses a channel measurement result (or a channel feature extracted from a channel measurement result) obtained by the UE by measuring a PRS sent by the base station as an input, and uses a location of the UE as an output.

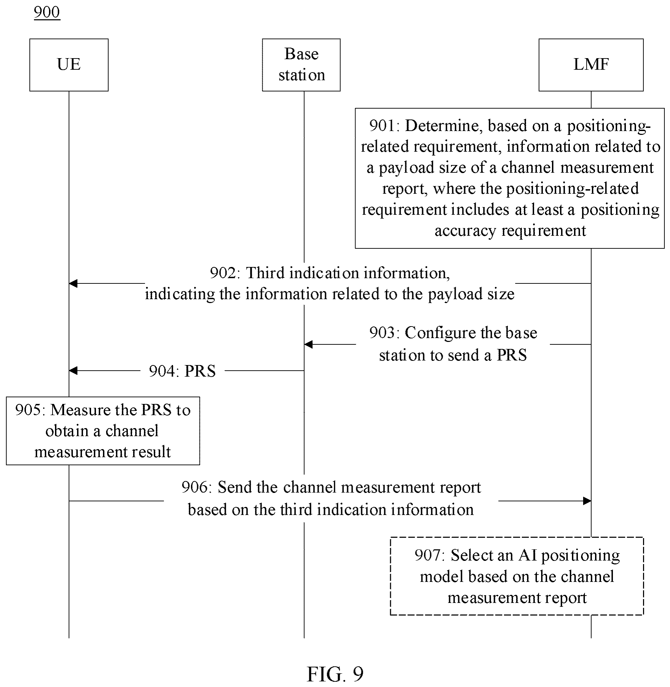

FIG. 9 is an example of application of information sending to downlink positioning according to this application.

901: The LMF determines, based on a positioning-related requirement, information related to a payload size of a channel measurement report.

902: The LMF sends third indication information to the UE, where the third indication information indicates the information related to the payload size.

Optionally, the third indication information may be carried in a measurement request sent by the LMF, or may be carried in a message different from a measurement request.

For details about steps 901 and 902, refer to descriptions in steps 510 and 520. Details are not described again.

903: The LMF configures the base station to send a PRS.

904: The base station sends the PRS to the UE based on the configuration of the LMF.

905: The UE measures the PRS from the base station to obtain a channel measurement result.

906: The UE sends the channel measurement report to the LMF based on the third indication information. The information related to the payload size of the channel measurement report is determined based on the third indication information.

Optionally, the LMF selects an AI positioning model based on the payload size of the channel measurement report.

The foregoing describes in detail the methods for sending information according to embodiments of this application. The following describes a communication apparatus provided in this application.

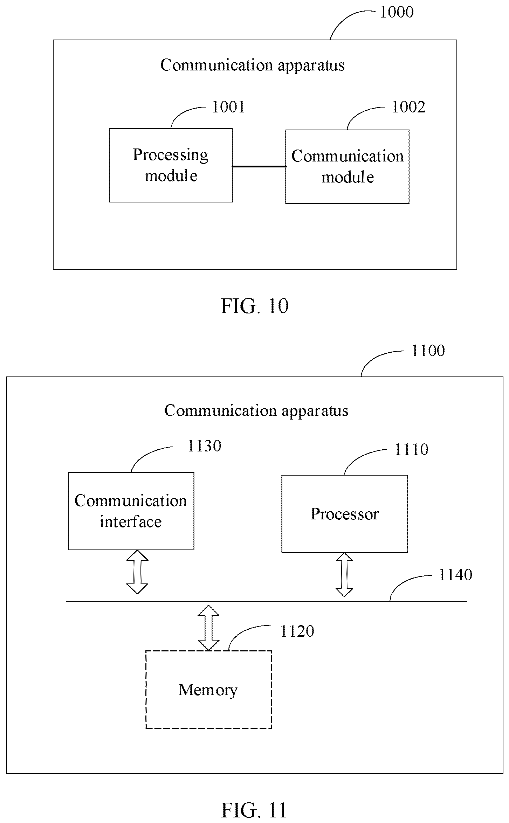

With reference to FIG. 10, this application provides a communication apparatus 1000. As shown in FIG. 10, the communication apparatus 1000 includes a processing module 1001 and a communication module 1002. The communication apparatus 1000 may be a first network element (for example, an access network device or a terminal device), or may be a communication apparatus applied to a first network element or used in combination with a first network element and capable of implementing a method performed by the first network element, for example, a chip, a chip system, or a circuit. Alternatively, the communication apparatus 1000 may be a location management function network element, or may be a communication apparatus applied to a location management function network element or used in combination with a location management function network element and capable of implementing a method performed by the location management function network element, for example, a chip, a chip system, or a circuit. For example, the location management function network element may be the LMF in the method embodiment of this application.

The communication module may also be referred to as a transceiver module, a transceiver, a transceiver device, a transceiver apparatus, or the like. The processing module may also be referred to as a processor, a processing board, a processing unit, a processing apparatus, or the like. Optionally, the communication module is configured to perform a sending operation and a receiving operation of the first network element (for example, the access network device or the terminal device) or the location management function network element in the foregoing method. A component that is in the communication module and that is configured to implement a receiving function may be considered as a receiving unit. A component that is in the communication module and that is configured to implement a sending function may be considered as a sending unit. In other words, the communication module includes the receiving unit and the sending unit.

When the communication apparatus 1000 is applied to the first network element, the processing module 1001 may be configured to implement a processing function of the first network element (for example, the access network device or the terminal device) in the embodiments in FIG. 1 to FIG. 9, and the communication module 1002 may be configured to implement receiving and sending functions of the first network element in the embodiments in FIG. 1 to FIG. 9.

When the communication apparatus 1000 is applied to the location management function network element, the processing module 1001 may be configured to implement a processing function of the location management function network element in the embodiments in FIG. 1 to FIG. 9, and the communication module 1002 may be configured to implement receiving and sending functions of the first network element in the embodiments in FIG. 1 to FIG. 9.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/circuit (for example, an integrated circuit or a logic circuit), the communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

In addition, with reference to FIG. 11, this application further provides a communication apparatus 1100. Optionally, the communication apparatus 1100 may be a chip or a chip system. Optionally, in this application, the chip system may include a chip or may include a chip and another discrete component.

The communication apparatus 1100 may be configured to implement a function of any network element (for example, a location management function network element or a first network element, where optionally, the first network element is an access network device or a terminal device) in the communication system described in the foregoing example. The communication apparatus 1100 may include at least one processor 1110. Optionally, the processor 1110 is coupled to a memory. The memory may be located in the apparatus. Alternatively, the memory may be integrated with the processor. Alternatively, the memory may be located outside the apparatus. For example, the communication apparatus 1100 may further include at least one memory 1120. The memory 1120 stores a computer program, a computer program or instructions, and/or data necessary for implementing any one of the foregoing examples. The processor 1110 may execute the computer program stored in the memory 1120, to complete the method in any one of the foregoing examples.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or a communication interface of another type. When the communication apparatus 1100 is a chip-type apparatus or circuit, the communication interface 1130 in the apparatus 1100 may alternatively be an input/output circuit, and may input information (or referred to as receiving information) and output information (or referred to as sending information). The processor 1110 is an integrated processor, a microprocessor, an integrated circuit, a logic circuit, or the like. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this application.

Optionally, as shown in FIG. 11, the processor 1110, the memory 1120, and the communication interface 1130 are connected to each other through a bus 1140. Optionally, the bus may include a type of bus such as an address bus, a data bus, or a control bus. In addition, for ease of representation, FIG. 11 shows one bus 1140, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor or any conventional processor or the like. The steps of the methods disclosed with reference to this application may be directly performed and completed by a hardware processor, or may be performed and completed by using a combination of hardware in the processor and a software module.

The memory may be a nonvolatile memory such as a hard disk drive (hard disk drive, HDD) or a solid-state drive (solid-state drive, SSD), or may be a volatile memory (volatile memory) such as a random access memory (random access memory, RAM). The memory is but not limited to any other medium that can be used to carry or store desired program code in a form of an instruction or a data structure and can be accessed by a computer. The memory in this application may alternatively be a circuit or any other apparatus that can implement a storage function, and is configured to store program instructions and/or data.

The communication apparatus 1100 provided in this example may be applied to a location management function network element (for example, an LMF) and complete a method performed by the location management function network element, or may be applied to a first network element and complete a method performed by the first network element. Therefore, for technical effects that can be achieved in this embodiment, refer to the descriptions in the foregoing method embodiments. Details are not described herein again.

Based on the foregoing examples, this application provides a communication system. In an example, the communication system includes a first network element and a location management function network element. Optionally, the communication system may further include at least one AI node. The communication system may implement the methods for sending information according to the embodiments shown in FIG. 1 to FIG. 9.

All or some of the technical solutions provided in this application may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or may be a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

The units described as separate parts may or may not be physically separate, and parts displayed as units may or may not be physical units, and may be located in one position, or may be distributed on a plurality of network units. Some or all of the units may be selected depending on actual requirements, to achieve the objectives of the solutions in embodiments.

In addition, functional units in embodiments of this application may be integrated into one processing unit, each of the units may exist alone physically, or two or more units are integrated into one unit.

At least one (item) in embodiments of this application indicates one (item) or more (items). "A plurality of (items)" means two (items) or more than two (items). The term "and/or" describes an association relationship between associated objects and represents that three relationships may exist. For example, A and/or B may represent the following three cases: Only A exists, both A and B exist, and only B exists. The character "/" generally indicates an "or" relationship between associated objects. In addition, it should be understood that although the terms first, second, and the like may be used in this application to describe objects, these objects are not limited by these terms. These terms are merely used to distinguish the objects from each other.

The term "include" and any other variant thereof mentioned in embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. In addition, terms such as "example" or "for example" are used to represent giving examples, illustrations, or descriptions. Any method or design solution described in this application as "example" or "for example" should not be construed as being more preferred or advantageous than another method or design solution. Specifically, use of terms such as "example" or "for example" is intended to describe related technical solutions or concepts by using examples in a specific manner.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for sending information, applied to a first network element and comprising:
sending first indication information to a location management function network element, wherein the first indication information indicates information related to a payload size of a channel measurement report, wherein
the information related to the payload size comprises one or more of the following:
a path quantity corresponding to one or more paths; and
a bit quantity corresponding to information about each of the one or more paths.

2. The method according to claim 1, wherein the method further comprises:
determining, based on a positioning accuracy requirement and a feature of a channel measurement result, the information related to the payload size.

3. The method according to claim 2, wherein determining, based on the positioning accuracy requirement and the feature of the channel measurement result, the information related to the payload size comprises:
determining, based on any one of the following mapping relationships, the information related to the payload size:
a mapping relationship between a positioning accuracy level and the information related to the payload size;
a mapping relationship between a channel condition and the information related to the payload size; and
a mapping relationship between a positioning accuracy level, a channel condition, and the information related to the payload size, wherein
the positioning accuracy level is determined based on the positioning accuracy requirement, and the channel condition is determined based on the feature of the channel measurement result.

4. The method according to claim 2 or 3, wherein the channel measurement result comprises information about the one or more paths, information about a first path of the one or more paths comprises one or more of the following information about the first path: amplitude and phase information, amplitude information, phase information, or angle information, and the first path is any one of the one or more paths.

5. The method according to any one of claims 2 to 4, wherein the first network element is a channel measurement network element, and the method further comprises:
receiving information about the positioning accuracy requirement from the location management function network element.

6. The method according to any one of claims 2 to 5, wherein the information about the positioning accuracy requirement is carried in a measurement request from the location management function network element.

7. The method according to any one of claims 2 to 6, wherein the first network element is an access network device, the channel measurement result is based on a first channel measurement, and the first channel measurement comprises: measuring a sounding reference signal from a terminal device; or
the first network element is a terminal device, the channel measurement result is based on a second channel measurement, and the second channel measurement comprises: measuring a positioning reference signal from an access network device.

8. The method according to any one of claims 2 to 7, wherein the feature of the channel measurement result comprises one or more of the following:
delay spread information, angle spread information, angle-delay-power information, a quantity of paths whose energy exceeds a preset energy proportion of energy of the first path in sampled paths, a Rician K-factor, a Doppler frequency measurement result, a line-of-sight LOS probability, an interference level of a sampled full band or subband, or reference signal received power RSRP of a full band or subband.

9. A method for sending information, applied to a location management function network element and comprising:
receiving first indication information from a first network element, wherein the first indication information indicates information related to a payload size of a channel measurement report, wherein
the information related to the payload size comprises one or more of the following:
a path quantity corresponding to one or more paths; and
a bit quantity corresponding to information about each of the one or more paths.

10. The method according to claim 9, wherein the information related to the payload size is based on a positioning accuracy requirement and a feature of a channel measurement result.

11. The method according to claim 10, wherein the information related to the payload size is determined based on any one of the following mapping relationships:
a mapping relationship between a positioning accuracy level and the information related to the payload size;
a mapping relationship between a channel condition and the information related to the payload size; and
a mapping relationship between a positioning accuracy level, a channel condition, and the information related to the payload size, wherein
the positioning accuracy level is determined based on the positioning accuracy requirement, and the channel condition is determined based on the feature of the channel measurement result.

12. The method according to claim 10 or 11, wherein the channel measurement result comprises information about the one or more paths, information about a first path of the one or more paths comprises one or more of the following information about the first path: amplitude and phase information, amplitude information, phase information, or angle information, and the first path is any one of the one or more paths.

13. The method according to any one of claims 10 to 12, wherein the method further comprises:
sending information about the positioning accuracy requirement to the first network element.

14. The method according to claim 13, wherein the information about the positioning accuracy requirement is carried in a measurement request sent by the location management function network element to the first network element.

15. The method according to any one of claims 10 to 14, wherein the feature of the channel measurement result comprises one or more of the following:
delay spread information, angle spread information, angle-delay-power information, a quantity of paths whose energy exceeds a preset energy proportion of energy of the first path in sampled paths, a Rician K-factor, a Doppler frequency measurement result, a line-of-sight LOS probability, an interference level of a sampled full band or subband, or reference signal received power RSRP of a full band or subband.

16. A method for sending information, comprising:
determining, based on a positioning-related requirement, information related to a payload size of a channel measurement report, wherein the positioning-related requirement comprises at least a positioning accuracy requirement, and the information related to the payload size comprises one or more of the following: a path quantity corresponding to one or more paths, or a bit quantity corresponding to information about each of the one or more paths;
sending third indication information, wherein the third indication information indicates the information related to the payload size; and
receiving the channel measurement report.

17. The method according to claim 16, wherein determining, based on the positioning-related requirement, the information related to the payload size of the channel measurement report comprises:
determining, based on a mapping relationship between the positioning-related requirement and the information related to the payload size, the information related to the payload size.

18. A method for sending information, comprising:
receiving third indication information from a location management function network element, wherein the third indication information indicates information related to a payload size of a channel measurement report, and the information related to the payload size comprises one or more of the following: a path quantity corresponding to one or more paths, or a bit quantity corresponding to information about each of the one or more paths; and
sending the channel measurement report to the location management function network element based on the third indication information.

19. The method according to claim 18, wherein the information related to the payload size is determined based on a positioning-related requirement, and the positioning-related requirement comprises at least a positioning accuracy requirement.

20. A method for sending information, comprising:
sending, by a first network element, first indication information to a location management function network element, wherein the first indication information indicates information related to a payload size of a channel measurement report, and the information related to the payload size comprises one or more of the following: a path quantity corresponding to one or more paths, or a bit quantity corresponding to information about each of the one or more paths; and
receiving, by the location management function network element, the first indication information from the first network element.

21. A method for sending information, comprising:
determining, by a location management function network element based on a positioning-related requirement, information related to a payload size of a channel measurement report, wherein the positioning-related requirement comprises at least a positioning accuracy requirement, and the information related to the payload size comprises one or more of the following: a path quantity corresponding to one or more paths, or a bit quantity corresponding to information about each of the one or more paths;
sending, by the location management function network element, third indication information to a first network element, wherein the third indication information indicates the information related to the payload size;
receiving, by the first network element, the third indication information;
sending, by the first network element, the channel measurement report to the location management function network element based on the third indication information; and
receiving, by the location management function network element, the channel measurement report from the first network element.

22. A communication apparatus, comprising:
a processor, wherein the processor is coupled to a memory, and the processor is configured to invoke computer program instructions stored in the memory, to perform the method according to any one of claims 1 to 19.

23. A computer-readable storage medium, wherein the computer-readable storage medium stores computer instructions, and when the computer instructions are run on a computer, the computer is enabled to perform the method according to any one of claims 1 to 19.

24. A computer program product, wherein the computer program product comprises computer instructions, and when the computer instructions are run on a computer, the computer is enabled to perform the method according to any one of claims 1 to 19.

25. A chip, comprising a processing circuit and a communication interface, wherein the communication interface is configured to receive data and/or information and transmit the received data and/or information to the processing circuit, and the processing circuit is configured to process the data and/or the information to perform the method according to any one of claims 1 to 19.

26. A communication system, comprising a communication apparatus configured to perform the method according to any one of claims 1 to 8 and a communication apparatus configured to perform the method according to any one of claims 9 to 15; or comprising a communication apparatus configured to perform the method according to claim 16 or 17 and a communication apparatus configured to perform the method according to claim 18 or 19.
